Europäisches Patentamt

European Patent Office

Office européen des brevets

(11) Veröffentlichungsnummer: **0 160 823**
**A1**

## (12) EUROPÄISCHE PATENTANMELDUNG

(21) Anmeldenummer: 85103652.5

(22) Anmeldetag: 27.03.85

(51) Int. Cl.⁴: **A 01 D 41/14**

(30) Priorität: 02.04.84 US 595869

(43) Veröffentlichungstag der Anmeldung:
13.11.85 Patentblatt 85/46

(84) Benannte Vertragsstaaten:
BE DE FR GB IT

(71) Anmelder: DEERE & COMPANY
1 John Deere Road
Moline Illinois 61265(US)

(72) Erfinder: Ehrecke, Kevin Laverne
634 Northbrook Drive
Davenport Iowa 52806(US)

(72) Erfinder: Braet, Jerome Alan
627 - 18th Avenue
East Moline Illinois 61244(US)

(72) Erfinder: Bassett, James Howard
2420 Scott Street
Davenport Iowa 52803(US)

(74) Vertreter: Sartorius, Peter et al,
DEERE & COMPANY European Office, Patent
Department Postfach 503 Steubenstrasse 36-42
D-6800 Mannheim 1(DE)

(54) Mähdrescher.

(57) Eine flexible Schneidwerksvorrichtung (24) mit einer Gleitkufe (66) ist über eine Parallelogrammlenkereinrichtung an dem nicht flexiblen Teil einer Schneidwerksplattform derart höhenbeweglich gelagert, daß die aus einzelnen Segmenten gebildete Schneidwerksvorrichtung der Bodenkontur folgen kann. Um den Auflagedruck der Gleitkufe (66) klein zu halten, ist ein Teil des Gewichtes der Schneidwerksplattform mittels mehrerer als Feder wirkender Hydraulikzylinder abgestützt, die gemeinsam an einen Druckspeicher angeschlossen sind. Ferner wird ein Teil des Gewichtes über eine zwischen dem Hauptrahmen (39) und dem Schneidwerk (24) vorgesehene Blattfeder abgestützt.

Fig.5

EP 0 160 823 A1

## Mähdrescher

Die Erfindung bezieht sich auf einen Mähdrescher mit einer vertikal schwenkbar gelagerten Schneidwerksplattform, die an einem quer verlaufenden Rahmen angeschlossen ist und eine quer verlaufende Schneidwerksvorrichtung aufweist, die über ihre gesamte Breite aus flexibel miteinander verbundenen Teilen gebildet ist und mittels mit seitlichem Abstand zueinander angeordneter parallelogrammartiger Lenkereinrichtungen am Rahmen derart vertikal verstellbar sowie mittels einer zwischen Schneidwerksvorrichtung und dem Rahmen wirkenden Feder schwimmend gelagert ist, daß sie der Bodenkontur folgen bzw. angepaßt werden kann.

Es ist ein Mähdrescher mit einer Schneidwerksplattform bekannt (US-A-3 982 383), die mit einem Schneidwerk ausgerüstet ist, das aus mehreren flexibel miteinander verbundenen Schneidwerkselementen besteht, die bei unebenem Gelände der Bodenkontur angepaßt werden. Die einzelnen Schneidwerkselemente sind über Parallelogrammlenker vertikal schwenkbar an einen Hauptrahmen angeschlossen. Um das Gewicht des auf dem Boden geführten Schneidwerkes gering zu halten, ist die Schneidwerksplattform mit Federelementen ausgerüstet, die der Abwärtsbewegung der Schneidwerkselemente entgegenwirken. Eine Einstellung der Feder ist lediglich im Bereich der Anschlußstellen der Feder an der Schneidwerksplattform möglich, deren Zugänglichkeit jedoch sehr erschwert ist.

Demgegenüber liegt der Erfindung die Aufgabe zugrunde, die Federelemente zur Verstellung der Schneidwerksplattform, insbesondere der flexiblen Schneidwerksvorrichtung, derart auszubilden und anzuordnen, daß unabhängig von der Höhenbewegung der Schneidwerksplattform die Schneidwerksvorrichtung in der gewünschten Schwimmstellung gehalten werden kann, wobei die Federelemente bzw. deren Anschlüsse so gewählt sind, daß eine einfache Einstellung der Stellkräfte der Federelemente möglich ist. Diese Aufgabe ist dadurch gelöst worden, daß die parallelogrammartigen Lenkereinrichtungen mit ihrem rückwärtigen Ende an einem einstellbaren Träger vertikal schwenkbar gelagert sind, der mittels eines quer verlaufenden Gelenkbolzens am Hauptrahmen angeordnet ist, wobei die zwischen den Lenkern und dem Hauptrahmen wirkenden Federn über eine Stellvorrichtung gemeinsam in ihrer Stellkraft veränderbar sind. Durch den vorteilhaften Einbau der Federelemente wird ein gleichmäßiger Anpreßdruck bei unterschiedlicher Höhenlage der Schneidwerkselemente gewährleistet, so daß an der Schneidwerksplattform keine Beschädigungen auftreten können. Ferner kann der Anpreßdruck der der Schneidwerksvorrichtung zugeordneten Führungselemente auf einfache Weise während des Arbeitseinsatzes verstellt werden, da lediglich der Träger zur Aufnahme der parallelogrammartigen Lenker verstellbar angeordnet ist. Durch die Verwendung einer Feder, die zwischen einem Lenker und dem Rahmen wirkt, und der zugehörigen Stellvorrichtung lassen sich ferner die Schwimmlage bzw. die auf den Boden einwirkenden Druckkräfte mittels der Gleitkufe der Schneidwerkselemente in kürzester Zeit verändern und unterschiedlichen Erntebedingungen anpassen. Hierzu ist es gemäß der Erfindung vorteilhaft, daß die Parallelogrammlenker mit ihrem einen Ende mittels quer verlaufender Gelenkbolzen an einen einstellbaren, mit dem Rahmen verbundenen Träger, anderenends an die Schneidwerksvorrichtung derart angeschlossen sind, daß sie mit Bezug auf die Schneidwerksplattform auf einem Kreisbogen verschwenkbar sind, und daß der Träger mittels eines quer verlaufenden Gelenkbolzens an einem Hauptrahmen vertikal schwenkbar gelagert ist.

In weiterer Ausgestaltung der Erfindung ist es vorteilhaft, daß ein jedes Federelement als hydraulische Druckmitteleinrichtung ausgebildet ist, der mindestens ein Hydraulikzylinder zugeordnet ist, dessen lastaufnehmendes Ende die druckmittelbeaufschlagbare Seite und dessen Anschlußende das kolbenstangenseitige Ende ist, wobei der Hydraulikzylinder an einen Druckmittelspeicher angeschlossen ist, der
in einem geschlossenen Druckmittelkreislauf integriert ist
und eine Veränderung der auf die Parallelogrammlenker einwirkenden Stellkräfte zuläßt. Durch die Verwendung eines
Hydraulikzylinders, der in Verbindung mit einem Druckspeicher als Federelement wirkt, kann auf einfache Weise die
Einstellkraft für die Schneidwerksvorrichtung verändert
werden, indem der Druck in der hydraulischen Anlage variiert wird. Hierzu ist es vorteilhaft, daß die Steuervorrichtung zur Veränderung der Stellkraft der Federkräfte
einen Kontrollschalter im Bereich des Bedienungsstandes
des Mähdreschers aufweist.

Eine zusätzliche Abstützung der Schneidwerksvorrichtung erhält man dadurch, daß zwischen dem Schneidwerk und nicht
flexiblen Teil der Schneidwerksplattform eine als Abdeckvorrichtung ausgebildete Blattfeder vorgesehen ist, deren
rückwärtiges Ende an dem nicht flexiblen Teil der Schneidwerksplattform fest angeordnet ist und deren vorderer Teil
mit dem Schneidwerk beweglich verbunden ist und einen Teil
des Gewichtes aufnimmt.

In weiterer Ausgestaltung der Erfindung ist es vorteilhaft,
daß das Federelement als flache Spiralfeder ausgebildet ist
und das rückwärtige Ende des Lenkers gegen den Druckteil
der Spiralfeder anliegt, wobei eine jede einzelne Feder
mit ihrem dem Druckteil gegenüberliegenden Ende mit einer
sich über die gesamte Breite der Schneidwerksplattform erstreckenden, über eine Stellvorrichtung einstellbaren
Welle fest verbunden ist. Die Feder unterstützt auf einfache Weise in Abhängigkeit von der Stellung der Welle die
Auf- und Abwärtsbewegung der Schneidwerksvorrichtung. Hierzu ist es vorteilhaft, daß die Welle einen Hebelarm aufweist, an den eine Stellvorrichtung, insbesondere ein mit
dem Hauptrahmen verbundener Hydraulikzylinder, angeschlossen ist. Anstelle des Hydraulikzylinders kann auch ein anderes Stellorgan vorgesehen werden. Beispielsweise ist es möglich, ein Spannschloß zwischen dem Hebelarm und dem Hauptrahmen anzuordnen.

In weiterer Ausgestaltung der Erfindung ist es vorteilhaft, daß die Parallelogrammlenker aus einem ersten einenends über einen Gelenkbolzen mit dem Schneidwerk, anderenends über einen Gelenkbolzen mit dem vertikal einstellbaren Träger verbundenen Lenker und einem zweiten parallel zum ersten Lenker verlaufenden Lenker gebildet sind, der ebenfalls einenends über einen Gelenkbolzen mit dem Schneidwerk, anderenends über einen Gelenkbolzen mit dem einstellbaren Träger verbunden ist.

Eine Verbilligung der gesamten Anordnung erhält man dadurch, daß der Träger und der obere Lenker auf einem gemeinsamen Gelenkbolzen am Hauptrahmen schwenkbar gelagert sind und an ihren rückwärtigen Enden je eine Einstellschraube aufweisen, die in einer in dem Hauptrahmen vorgesehenen Gewindebohrung verstellbar aufgenommen ist. In einfacher Weise ist das lastaufnehmende Ende des Hydraulikzylinders an das hintere Ende des oberen Lenkers angeschlossen. Ferner ist es vorteilhaft, daß der Träger zur Begrenzung der Auf- und der Abwärtsbewegung des oberen Lenkers Arretierungselemente aufweist. Durch die Verwendung von Arretierungselementen wird ein zu großer Ausschlag der einzelnen Stellelemente verhindert, insbesondere dann, wenn beispielsweise die hydraulische Anlage nicht eingesetzt ist. Durch die Verwendung einer Einstellschraube, die am rückwärtigen Ende des Hauptrahmens vorgesehen ist, läßt sich der Träger auf einfache Weise in seiner Höhenlage verändern und somit beispielsweise die Einstellkraft des Federelementes bzw. der hydraulischen Feder oder der Spiralfeder, ohne daß hierdurch die Bewegungsfreiheit der Parallelogrammlenker in irgendeiner Weise ungünstig beeinflußt wird. Dabei können die Federkräfte entweder auf den vorderen oder hinteren Lenker wirken, wobei es besonders vorteilhaft ist, wenn die Federkräfte auf die vorderen Lenker wirken. Durch die Verwendung der Parallelogrammlenker wird ferner sichergestellt, daß die Führungselemente bzw. die Gleitkufe der Schneidwerksvorrichtung eine annähernd horizontale Lage beibehalten, gleich welche Stellung die einzelnen Lenker einnehmen.

Durch die Verwendung der zwischen der Schneidwerksvorrichtung und dem feststehenden Teil der Schneidwerksplattform vorgesehenen Feder erhält man auf einfache Weise einen Boden, über den das Erntegut gleiten kann, wenn es von der Schneidwerksvorrichtung abgetrennt ist. Gleichzeitig dient dieser Boden auch zur teilweisen Unterstützung des Gewichtes der Schneidwerksvorrichtung, so daß die übrigen Tragelemente auf diese Weise entlastet werden können. Hierzu ist es vorteilhaft, daß der vordere Teil der Feder derart beweglich mit der Schneidwerksvorrichtung verbunden ist, daß keine Druckkräfte bzw. Biegekräfte auf die Feder zusätzlich übertragen werden.

Ferner ist es vorteilhaft, daß als Feder jedem einzelnen höhenbeweglichen Segment der Schneidwerksvorrichtung ein Hydraulikzylinder zugeordnet ist.

Im folgenden wird die Erfindung anhand von lediglich zwei Ausführungswege darstellenden Zeichnungen näher erläutert. Es zeigt:

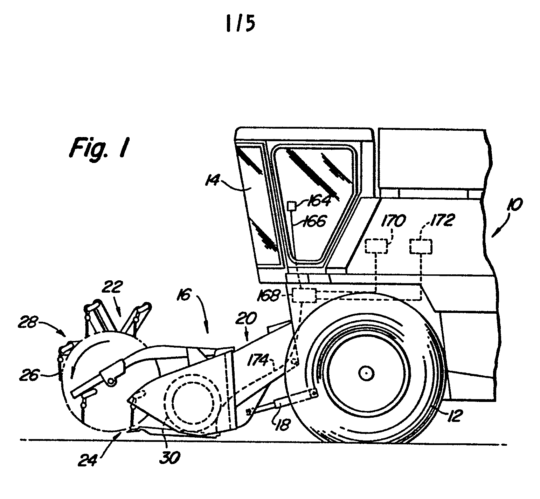

Fig. 1    den vorderen Teil eines Mähdreschers mit einer Erntebergungsvorrichtung,

Fig. 2    eine vergrößerte Darstellung der Erntebergungsvorrichtung gemäß Fig. 1,

Fig. 3    die Schneidwerksplattform der Erntebergungsvorrichtung,

Fig. 4    einen Schnitt entlang der Linie 4 - 4 gemäß Fig. 3,

Fig. 5    die einzelnen Teile der Aufhängungen der
Schneidwerksplattform in ausgezogener Darstellung,

Fig. 6    eine Schnittdarstellung eines weiteren Ausführungsbeispiels der Schneidwerksplattformaufhängung,

Fig. 7    eine Teildraufsicht der Erntebergungsvorrichtung.

In der Zeichnung ist mit 10 der vordere Teil eines Mähdreschers bezeichnet, der sich auf antreibbaren Laufrädern 12
abstützt, die unterhalb einer Fahrerkabine 14 vorgesehen
sind. Die Arbeitshöhe einer Schneidwerksplattform 16 des
Mähdreschers 10 wird mittels zweier Hydraulikzylinder 18
gesteuert, die einenends an eine unterhalb der Fahrerkabine 14 vorgesehene Halterung, anderenends an ein Schrägfördergehäuse 20 der Schneidwerksplattform 16 gelenkig angeschlossen sind. Die Schneidwerksplattform 16 weist Einzugsorgane 22 sowie ein flexibles Schneidwerk 24 auf.

Im Arbeitseinsatz, wenn der Mähdrescher 10 über das Feld
fährt, bewegen die Finger 26 eine Haspel 28 nach hinten
über das Schneidwerk 24 und dann zu einer quer verlaufenden Einzugsschnecke 30, die das Erntegut zur Mitte hin zusammenzieht und es in das Schrägfördergehäuse 20 leitet,
von dem es der Dresch- und Reinigungsvorrichtung des Mähdreschers 10 zugeführt wird.

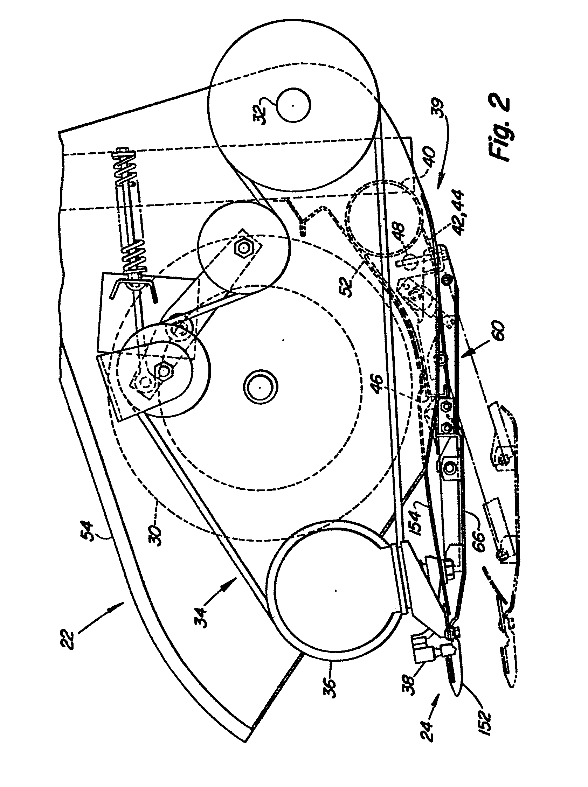

Wie aus Fig. 2 hervorgeht, erfolgt der Antrieb des Schneidwerkes 24 über eine an der Rückseite der Schneidwerksplattform 16 vorgesehene Antriebswelle 32, die über ein Zugmittelgetriebe 34 eine Exzenterscheibe 36 sowie eine Schwinghebeleinrichtung 38 antreibt. Die Exzenterscheibe 36 ist
auf dem Schneidwerk 24 angeordnet, so daß der Antrieb des
Schneidwerkes durch die Flexibilität des Schneidwerkes 24
nicht beeinflußt wird.

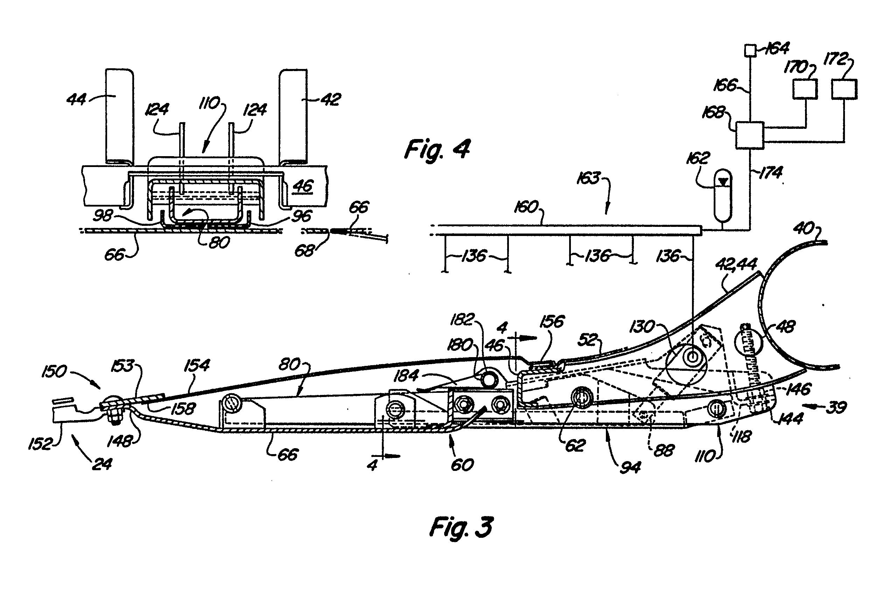

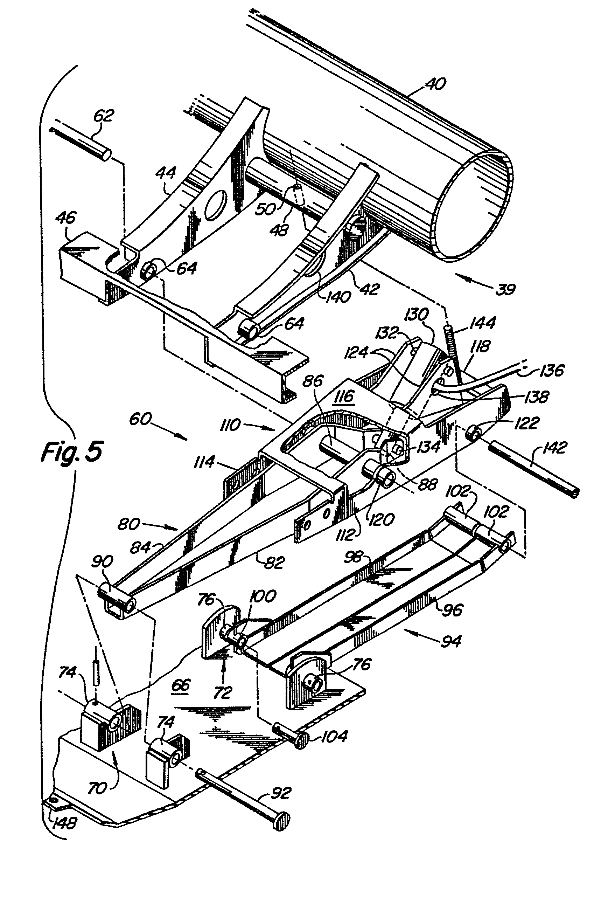

Die Schneidwerksplattform 16 weist einen Hauptrahmen 39 auf, zu dem ein sich über die gesamte Breite der Schneidwerksplattform 16 erstreckender Träger 40 gehört. Die einzelnen Teile der Rahmenkonstruktion gehen aus den Figuren 3, 4 und 5 hervor. An dem Träger sind mehrere sich nach vorne erstreckende Halterungen 42 und 44 (siehe insbesondere Fig. 5) angeordnet. An den vorderen Enden der Halterungen 42 und 44 befindet sich ein Querträger 46, der ebenfalls die gesamte Breite der Schneidwerksplattform 16 überspannt. Unmittelbar vor dem Träger 40 nehmen die beiden Halterungen 42 und 44 eine Strebe 48 auf, die mittig mit einer Bohrung 50 ausgerüstet ist. Die beiden Halterungen 42 und 44 sind an ihrer oberen Kante mit einem muldenförmigen Steg ausgerüstet, auf dem ein Boden 52 der Schneidwerksplattform 16 angeordnet ist. Die muldenförmige Ausbildung des Bodens 52 folgt teilweise dem Kreisumfang der Einzugsschnecke 30 und wirkt mit dieser somit zusammen, um Erntegut dem Schrägfördergehäuse zuzuführen. Die Schneidwerksplattform ist durch Seitenwände 54 begrenzt (In Fig. 2 ist lediglich die linke Seitenwand dargestellt).

Wie insbesondere aus Fig. 5 hervorgeht, wird das in Fig. 5 nicht dargestellte Schneidwerk über mehrere nebeneinander angeordnete Tragvorrichtungen 60 abgestützt, wobei eine jede Tragvorrichtung 60 mittels je eines Gelenkbolzens 62, der sich durch eine Buchse 64 erstreckt, an die vorderen Enden der Halterung 42, 44 schwenkbar angeschlossen ist.

An die Tragvorrichtung 60 ist eine Gleitkufe 66 angeschlossen. Im eingebauten Zustand aller Gleitkufen 66 liegen die vorderen Kanten 68 der Gleitkufen 66 auf einer Ebene, so daß die Unterseite der Schneidwerksplattform 16 einen in etwa durchgehenden, jedoch flexiblen Boden bildet, der sich über die gesamte Breite (siehe hierzu Fig. 4) der Schneidwerksplattform 16 erstreckt. Die Oberfläche der Gleitkufe 66 ist mit zwei vorderen Anschlußösen 70 und zwei hinteren Anschlußösen 72 ausgerüstet. Die beiden vorderen Anschlußösen weisen je eine vordere Buchse 74 und die beiden hinteren Anschlußösen je eine hintere Buchse 76 auf, wobei jeweils die nebeneinander liegenden Buchsen 74 bzw. 76 untereinander fluchten. Die Gleitkufe 66 ist an einen ersten oberen Lenker 80 angeschlossen, der aus zwei Trägern 82 und 84 gebildet ist, die einenends über eine Buchse 86 und anderenends über eine Buchse 90 miteinander verbunden sind. Hinter der Buchse 86 befindet sich eine als Bohrung 88 ausgebildete Anschlußstelle für einen Hydraulikzylinder 130. Ein Gelenkbolzen 92 verbindet die Gleitkufe 66 mit dem Lenker 80. Der Gelenkbolzen 92 wird hierzu in die Buchsen 74, 76 und 90 eingeführt.

Unterhalb des Lenkers 80 befindet sich ein zweiter Lenker 94, der aus zwei Trägern 96 und 98 gebildet ist. Ein jeder Träger 96 und 98 weist zwei vordere Buchsen 100 und zwei hintere Buchsen 102 auf, die zur Aufnahme von Gelenkbolzen 104 bzw. 142 dienen. Die Gelenkbolzen 104 werden hierzu durch die Buchsen 76 der Gleitkufe 66 und die Buchsen 100 der Träger 96 und 98 eingeführt. Auf diese Weise ist das hintere Ende der Gleitkufe 66 mit dem unteren Lenker 94 und das vordere Ende der Gleitkufe mit dem vorderen Ende des Lenkers 80 gelenkig verbunden.

Eine jede Tragvorrichtung 60 ist mit dem Hauptrahmen 39 an einen um eine horizontal verlaufende Achse kippbaren Träger 110 angeschlossen, der durch gegenüberliegende Seitenwände 112 und 114, eine obere Wand 116 sowie eine hintere Strebe 118 gebildet ist. Im Bereich der Strebe 118 befinden sich in den Seitenwänden 112 und 114 koaxial zueinander verlaufende Buchsen 122, und unterhalb der oberen Wand 116 befindet sich eine Buchse 120, die sich ebenfalls durch beide Seitenwände 112 und 114 erstreckt und diese ebenfalls starr miteinander verbindet. Zwischen der Strebe 118 und der hinteren Kante der oberen Wand 116 befinden sich zwei parallel zueinander verlaufende Platten 124, die sich in Richtung des Trägers 110 erstrecken. Um die Tragvorrichtung 60 an die Schneidwerksplattform 16 anzuschließen, werden die hinteren Buchsen 102 der Träger 96 und 98 mit den Buchsen 122 des Trägers 110 gemäß Fig. 5 koaxial zueinander ausgerichtet und der Gelenkbolzen 142 in die Buchsen eingeführt. Der Hydraulikzylinder 130 ist zwischen den Platten 124 mittels eines Gelenkbolzens 132 schwenkbar aufgenommen. Das kolbenstangenseitige Ende des Hydraulikzylinders 130 ist über einen Gelenkbolzen 132 an die beiden gegenüberliegenden Enden der Träger 82 und 84 gelenkig angeschlossen.

Der Hydraulikzylinder 130 kann als einfach wirkender Hydraulikzylinder ausgebildet sein und mittels einer Hydraulikleitung 136 an eine Druckmittelquelle angeschlossen werden. Die Hydraulikleitung 136 ist hierzu durch die in der Platte 124 vorgesehene Bohrung 138 und durch die in der Halterung 42 vorgesehene Bohrung 140 geführt. Die Gleitkufe 66 wird, wie bereits beschrieben, als nächstes an die Lenker 80 und 94 angeschlossen. Eine jede Tragvorrichtung 60 kann nunmehr an den Hauptrahmen 39 angeschlossen werden. Hierzu werden die Hauptbuchse 86 und die Buchsen 120 des kippbaren bzw. verschwenkbaren Trägers 110 koaxial zu den beiden in den Halterungen 42 und 44 angeordneten Buchsen 64 ausgerichtet, so daß der Gelenkbolzen 62 eingeführt werden kann. Um den Anbau der Tragvorrichtung 60 zu vervollständigen, muß eine Stellschraube 144 mit einer Stellmutter 146 an einen horizontal verlaufenden Steg der Strebe 118 angeschlossen werden. Die Stellschraube 144 wird dann in die Bohrung 50 der Strebe 48 des Hauptrahmens 39 eingeschraubt.

Wenn nunmehr zahlreiche nebeneinander liegende Tragvorrichtungen 60 an die Schneidwerksplattform 16 angeschlossen sind, kann das Schneidwerk 24 montiert werden, das hierzu an Ösen 148 angeschlossen wird, die an der vorderen Kante der Gleitkufe 66 vorgesehen sind (siehe Fig. 3). Das Schneidwerk 24 wird mittels Schraubenbolzen 150 befestigt, die eine obere Tragplatte 153 und die Öse 148 der Gleitkufe 66 zusammenklemmen.

Eine Blattfeder 154 dient als Förderoberfläche und überbrückt die Lücke zwischen dem Schneidwerk 24 und dem festen
Boden 52 der Schneidwerksplattform 16. Die hintere Kante 156
ist fest an den Querträger 46 angeschlossen, während das
vordere Ende 158 frei beweglich ist und sich unter die
Platte 153 erstreckt.

Der Einbau des Schneidwerkes 24 wird durch Anschluß der Hydraulikleitung 136 an eine Verteilerleitung 160 (siehe die
graphische Darstellung in Fig. 3) vervollständigt. Die Verteilerleitung 160 ist mit einem Druckspeicher 162 verbunden,
die an eine Hydraulikleitung 174 angeschlossen ist. Zu dem
flexiblen Hydrauliksystem (Federsystem) 163 gehören der
Hydraulikzylinder 130, die Verteilerleitung 160 sowie der
Druckspeicher 162, die alle mit Druckmittel beaufschlagt
sind. Der Druckspeicher 162 (Gasdruckspeicher) verleiht
dem Hydrauliksystem 163 eine gewisse Kompressibilität, so
daß die Hydraulikzylinder 130 unabhängig voneinander einsatzfähig sind und somit in etwa auch als Druckfeder wirken. Es wird darauf hingewiesen, daß das Hydrauliksystem
163 bzw. dieses Federsystem von einer gemeinsamen Quelle
(Druckspeicher 162, Verteilerleitung 160) gespeist werden
und somit in einer Reihe geschaltete Hydraulikfedern zur
Verfügung stellen (Hydraulikzylinder 130). Der Druck in dem
Hydrauliksystem 163 wird in der Fahrerkabine 14 über einen
Kontrollschalter 164 gesteuert, der über elektrische Leitungen 166 mit einer elektrischen Schalteinrichtung 168 des
Mähdreschers 10 in Wirkverbindung steht. Die elektrische
Versorgung erfolgt beispielsweise über eine Batterie 170
und die hydraulische Druckmittelversorgung über ein Aggregat bzw. eine hydraulische Pumpe 172, die im Mähdrescher 10
vorgesehen sind. Das Hydrauliksystem 163 wird über die Hydraulikleitung 174 mit Druckmittel versorgt.

Die normale Arbeitshöhe der Schneidwerksplattform 16 und
somit der Bereich für die schwimmende Stellung der Schneidwerksplattform werden durch eine automatische Höhenkontrolleinrichtung gesteuert, die in Abhängigkeit von der Bewegung zwischen dem Schneidwerk 24 und den feststehenden Teilen der Schneidwerksplattform 16 steht. In den Zeichnungen (Fig. 3) ist lediglich der Sensorteil des Steuersystems dargestellt, zu dem eine quer verlaufende Welle 180 gehört, die in einer Halterung 182 drehbar aufgenommen ist, die am Träger 110 angeordnet ist. Der Welle 180 sind zahlreiche Sensorarme bzw. Platten 184 zugeordnet, die gegen die Oberfläche des Lenkers 80 zur Anlage kommen. Somit steht die Höhensteuervorrichtung in jeder Stellung der Schneidwerksplattform 16 in Abhängigkeit von der Gleitkufe 66, wenn sich das Schneidwerk 24 bei unebenem Boden in einer Schwimmstellung befindet.

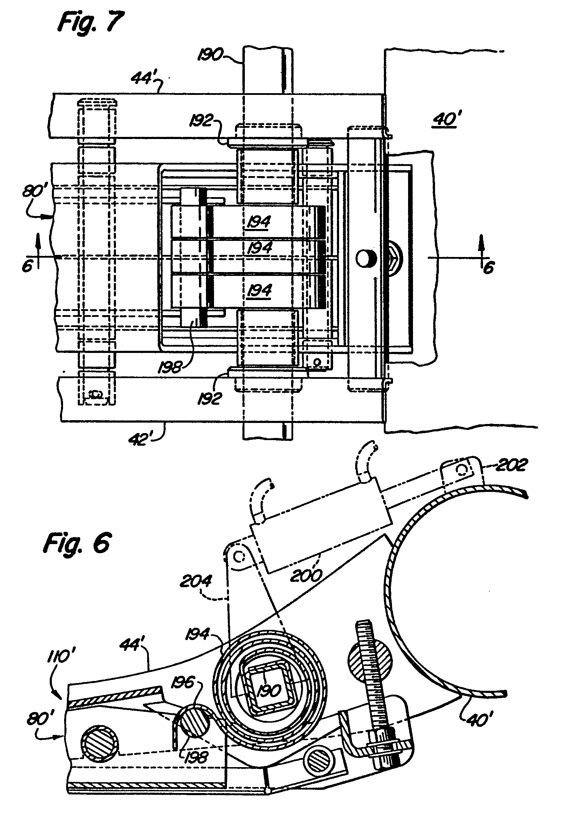

In den Figuren 6 und 7 ist ein weiteres Ausführungsbeispiel veranschaulicht. Bei dieser Anordnung wird eine mechanische Federeinrichtung anstelle der hydraulischen Federeinrichtung eingesetzt. Die Feder wirkt zwischen dem Lenker 80' und einer Welle 190, die in in Halterungen 42', 44' aufgenommenen Buchsen 192 einstellbar gelagert ist. In diesem Ausführungsbeispiel weist die Federeinrichtung drei flach gewundene Spiralfedern 194 auf, die einenends mit der einstellbaren Welle 180 verbunden sind und mit ihren freien Enden 196 eine Stellkraft auf einen Bolzen 198 ausüben, der von dem Lenker 80' aufgenommen ist. Die Stellgröße der Feder kann durch entsprechende Stellorgane, die in der Zeichnung jedoch nicht dargestellt sind, beeinflußt werden. Wie aus Fig. 6 hervorgeht (siehe gestrichelte Darstellung), wird die gesamte Anordnung über einen Hydraulikzylinder 200 von der Fahrerkabine 14 des Mähdreschers 10 aus gesteuert. Der Hydraulikzylinder 200 ist hierzu einenends an die Öse 202, die mit dem Träger 40' verbunden ist, anderenends an einen Hebelarm 204 angeschlossen, der mit der Welle 190 fest verbunden ist, und auf diese Weise wird eine Verstellung der Welle 190 ermöglicht, um somit die Federstellkraft zu beeinflussen. Bei einer anderen in der Zeichnung nicht dargestellten Ausführungsform kann der Hydraulikzylinder 200 durch eine Spannschraube ersetzt werden, die aufgrund ihres Stellweges eine entsprechende Verstellung der Welle 190 herbeiführt und somit die Stellkraft der Feder beeinflußt. Ferner ist es auch möglich, Getriebeteile in Verbindung mit einer Getriebeschnecke einzusetzen, um somit den Hebelarm 204 und die Welle 190 entsprechend zu verstellen. Es wird darauf hingewiesen, daß durch eine einzige Stellvorrichtung alle Federn 194, die nebeneinander angeordnet sind und mit der Schneidwerksplattform 16 in Wirkverbindung stehen, gemeinsam verstellbar sind. Die Feder 194 kann aus einem oder mehreren Elementen gebildet sein. So kann beispielsweise die Federstellkraft, die an den gegenüberliegenden Enden der Schneidwerksplattform 16 wirkt, unterschiedlich sein von der Federstellkraft, die beispielsweise auf andere Gehäuseteile der Schneidwerksplattform einwirkt, so daß am Ende eine gleichmäßige Schwimmcharacteristik für die Schneidwerksplattform über die gesamte Breite gewährleistet wird.

Im Arbeitseinsatz wird aufgrund der Schwimmstellungseigenschaften der Schneidwerksplattform die Gewährleistung gegeben, den entsprechenden Bodendruck zu bestimmen, gleich welcher vertikale Schwimmstellungsbereich für die entsprechende Arbeit ausgesucht worden ist. Dies kann auf einfache Weise von der Fahrerplattform während des Arbeitseinsatzes bewerkstelligt werden. Hierzu kann beispielsweise eine Fernbedienungseinrichtung verwendet werden. Der Schwimmstellungsdruck kann unabhängig von der Stellung im Schwimmstellungsbereich gesteuert werden. Die Einstellung des Schneidwerkes sowie der Gleitkufe mit Bezug auf den Boden wird auf einfache Weise durch Einstellung der Stellschraube 144 und der Stellmutter 146 beeinflußt. Die Tragvorrichtung 60 der Gleitkufe 66 schwenkt um den Gelenkbolzen 62, ohne daß dabei an der Schneidwerksplattform 16 übermäßige Biegekräfte bzw. Drehkräfte auftreten. Da das Gegengewicht der Lenker der Tragvorrichtung 60 ausbalanciert ist, wird durch die Verstellung das Gleichgewicht der Federeinstellung gestört.

Die Blattfeder 154 ist mit Bezug auf die rückwärtige Kante 156 freitragend angeordnet. Hierdurch schwenkt die Blattfeder aufwärts und wirkt somit auf die Unterseite der Platte 153. Das Material der Blattfeder 154 weist eine ausreichende Elastizität auf, so daß zumindest mit der Platte 153 während der Schwimmstellung ein Kontakt aufrechterhalten wird. Ferner trägt die Blattfeder 154 dazu bei, für das Schneidwerk 24 ein ausreichendes Gegengewicht zu schaffen. Bei Verwendung einer in der Zeichnung nicht dargestellten Stellvorrichtung, um die Stellkraft der Blattfeder 154 zu beeinflussen bzw. diese mit Bezug auf das Schneidwerk 24 entsprechend auszubalancieren, kann der Bodendruck, der mittels der Gleitkufe 66 auf den Boden ausgeübt wird, entsprechend variiert werden.

Patentansprüche

1. Mähdrescher mit einer vertikal schwenkbar gelagerten Schneidwerksplattform (16), die an einem quer verlaufenden Rahmen angeschlossen ist und eine quer verlaufende Schneidwerksvorrichtung aufweist, die über ihre gesamte Breite aus flexibel miteinander verbundenen Teilen gebildet ist und mittels mit seitlichem Abstand zueinander angeordneter parallelogrammartiger Lenkereinrichtungen am Rahmen derart vertikal verstellbar sowie mittels einer zwischen Schneidwerksvorrichtung und dem Rahmen (39) wirkenden Feder schwimmend gelagert ist, daß sie der Bodenkontur folgen bzw. angepaßt werden kann, dadurch gekennzeichnet, daß die parallelogrammartigen Lenkereinrichtungen mit ihrem rückwärtigen Ende an einem einstellbaren Träger (110) vertikal schwenkbar gelagert sind, der mittels eines quer verlaufenden Gelenkbolzens (142) am Hauptrahmen angeordnet ist, wobei die zwischen den Lenkern und dem Hauptrahmen (39) wirkenden Federn über eine Stellvorrichtung gemeinsam in ihrer Stellkraft veränderbar sind.

2. Mähdrescher nach Anspruch 1, dadurch gekennzeichnet, daß die Parallelogrammlenker mit ihrem einen Ende mittels quer verlaufender Gelenkbolzen (142, 62) an einen einstellbaren, mit dem Rahmen verbundenen Träger (110), anderenends an die Schneidwerksvorrichtung derart angeschlossen sind, daß sie mit Bezug auf die Schneidwerksplattform (16) auf einem Kreisbogen verschwenkbar sind.

3. Mähdrescher nach Anspruch 2, dadurch gekennzeichnet, daß der Träger (110) mittels eines quer verlaufenden Gelenkbolzens (62) an einem Hauptrahmen (39) vertikal schwenkbar gelagert ist.

4. Mähdrescher nach einem oder mehreren der vorherigen Ansprüche, dadurch gekennzeichnet, daß ein jedes Federelement als hydraulische Druckmitteleinrichtung ausgebildet ist, der mindestens ein Hydraulikzylinder (130) zugeordnet ist, dessen lastaufnehmendes Ende die druckmittelbeaufschlagbare Seite und dessen Anschlußende das kolbenstangenseitige Ende ist, wobei der Hydraulikzylinder (130) an einen Druckmittelspeicher (162) angeschlossen ist, der in einem geschlossenen Druckmittelkreislauf integriert ist und eine Veränderung der auf die Parallelogrammlenker einwirkenden Stellkräfte zuläßt.

5. Mähdrescher nach Anspruch 1, dadurch gekennzeichnet, daß die Steuervorrichtung zur Veränderung der Stellkraft der Federkräfte einen Kontrollschalter (164) im Bereich des Bedienungsstandes des Mähdreschers (10) aufweist.

6. Mähdrescher nach einem oder mehreren der vorherigen Ansprüche, dadurch gekennzeichnet, daß zwischen dem Schneidwerk (24) und nicht flexiblen Teil der Schneidwerksplattform (16) eine als Abdeckvorrichtung ausgebildete Blattfeder (154) vorgesehen ist, deren rückwärtiges Ende an dem nicht flexiblen Teil der Schneidwerksplattform fest angeordnet ist und deren vorderer Teil mit dem Schneidwerk (24) beweglich verbunden ist und einen Teil des Gewichtes aufnimmt.

7. Mähdrescher nach Anspruch 1, dadurch gekennzeichnet, daß das Federelement als flache Spiralfeder (194) ausgebildet ist und das rückwärtige Ende des Lenkers (80') gegen den Druckteil (Ende 196) der Spiralfeder (194) anliegt, wobei eine jede einzelne Feder mit ihrem dem Druckteil gegenüberliegenden Ende mit einer sich über die gesamte Breite der Schneidwerksplattform (16) erstreckenden, über eine Stellvorrichtung einstellbaren Welle (190) fest verbunden ist.

8. Mähdrescher nach Anspruch 7, dadurch gekennzeichnet, daß die Welle (190) einen Hebelarm (204) aufweist, an den eine Stellvorrichtung, insbesondere ein mit dem Hauptrahmen (39) verbundener Hydraulikzylinder (200), angeschlossen ist.

9. Mähdrescher nach Anspruch 2, dadurch gekennzeichnet, daß die Parallelogrammlenker aus einem ersten einenends über einen Gelenkbolzen (92) mit dem Schneidwerk (24), anderenends über einen Gelenkbolzen (142) mit dem vertikal einstellbaren Träger (110) verbundenen Lenker (80) und einem zweiten parallel zum ersten Lenker (80) verlaufenden Lenker (94) gebildet sind, der ebenfalls einenends über einen Gelenkbolzen mit dem Schneidwerk (24), anderenends über einen Gelenkbolzen (142) mit dem einstellbaren Träger (110) verbunden ist.

10. Mähdrescher nach Anspruch 9, dadurch gekennzeichnet, daß der Träger (110) und der obere Lenker (80) auf einem gemeinsamen Gelenkbolzen (62) am Hauptrahmen (39) schwenkbar gelagert sind und an ihren rückwärtigen Enden je eine Einstellschraube (144) aufweisen, die in einer in dem Hauptrahmen (39) vorgesehenen Gewindebohrung (50) verstellbar aufgenommen ist.

11. Mähdrescher nach einem oder mehreren der vorherigen Ansprüche, dadurch gekennzeichnet, daß das lastaufnehmende Ende des Hydraulikzylinders (130) an das hintere Ende des oberen Lenkers (80) angeschlossen ist.

12. Mähdrescher nach einem oder mehreren der vorherigen Ansprüche, dadurch gekennzeichnet, daß der Träger (110) zur Begrenzung der Auf- und der Abwärtsbewegung des oberen Lenkers (80) Arretierungselemente aufweist.

13. Mähdrescher nach einem oder mehreren der vorherigen
    Ansprüche, dadurch gekennzeichnet, daß als Feder jedem
    einzelnen höhenbeweglichen Segment der Schneidwerksvorrichtung ein Hydraulikzylinder (130) zugeordnet
    ist.

1/5

Fig. 1

2/5

Fig. 2

Fig. 4

Fig. 3

Fig. 5

5/5

Fig. 7

Fig. 6

Europäisches
Patentamt

EUROPÄISCHER RECHERCHENBERICHT

0160823
Nummer der Anmeldung

EP 85 10 3652

## EINSCHLÄGIGE DOKUMENTE

| Kategorie | Kennzeichnung des Dokuments mit Angabe, soweit erforderlich. der maßgeblichen Teile | Betrifft Anspruch | KLASSIFIKATION DER ANMELDUNG (Int. Cl.4) |
|---|---|---|---|
| D,A | US-A-3 982 383 (R.E. MOTT) <br> * Figur 4 * | 1 | A 01 D 41/14 |
| A | US-A-4 441 307 (M. H. ENZMANN) <br> * Figur 5 * | 1 | |
| A | US-A-4 206 582 (H.W. MOLZAHN) <br> * Figur 2 * | 1 | |
| A | DE-A-2 018 902 (INTERNATIONAL HARVESTER CO.) <br> * Seite 2, 3. Absatz; Figuren 1,3 * | 1 | |

RECHERCHIERTE SACHGEBIETE (Int. Cl.4)

A 01 D 41/00

Der vorliegende Recherchenbericht wurde für alle Patentansprüche erstellt.

| Recherchenort <br> BERLIN | Abschlußdatum der Recherche <br> 27-06-1985 | Prüfer <br> WUNDERLICH J E |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82